# EUROPÄISCHE PATENTSCHRIFT

(11) **EP 2 684 820 B1**
(45) Veröffentlichungstag und Bekanntmachung des Hinweises auf die Patenterteilung: **14.01.2015**
(21) Anmeldenummer: 12005158.6
(22) Anmeldetag: 13.07.2012
(51) Int. Cl.: B65G 1/02

(54) **Lagerregal**
Shelf
Rayonnage de stockage

(43) Veröffentlichungstag der Anmeldung: 15.01.2014
(73) Patentinhaber: Fritz Schäfer GmbH, 57072 Siegen (DE)
(72) Erfinder: Bender, Joachim, 57520 Molzhain (DE); Utsch, Karl-Heinz, 57562 Herdorf (DE); Weber, Michael, 57562 Herdorf (DE)
(74) Vertreter: Grosse, Wolf-Dietrich Rüdiger

(56) Entgegenhaltungen:
- DE-U1-202009 015 918

## Beschreibung

Die Erfindung betrifft ein Lagerregal mit zur Ablage von Lasten in dessen eckseitigen Regalständern eingehängten Gitterfachböden, die aus stirnendseitigen, in der Einbaulage im Regal quer verlaufenden Auflageprofilen, sich orthogonal zu den Auflageprofilen in Längsrichtung erstreckenden vorderen und hinteren Außenprofilträgern sowie mindestens einem parallel beabstandet zu den Außenprofilträgern verlaufenden Zwischenprofilträger und einer Drahtgittermatte bestehen.

Durch die DE 20 2009 015 918 U1 ist ein solcher für einen Lagerregalaufbau geeigneter Gitterfachboden bekannt. Dieser besteht aus zwei spiegelbildlich zueinander ausgerichteten Auflageprofilen und mehreren damit verbundenen, im Querschnitt im wesentlichen C-förmigen Querträgern, die mit Eingrifflaschen in Ausnehmungen in den Auflageprofilen so eingesteckt sind, dass die Drahtgittermatte auf den oberen Flanschen der Profile zur Auflage kommt. Die einzelnen Profile dieses nach einem Steckprinzip zusammengesetzten Gitterfachbodens können beispielsweise aus vorverzinktem Material durch Stanzen, Laserschneiden oder dergleichen vorgefertigt und anschließend profiliert werden.

Damit der Gitterfachboden zur Einlagerung von schweren Lasten, wie Behälter, Kartons, Fässer oder Paletten, eine ausreichende Tragfähigkeit gewährleisten kann, sind aufwendige Steckverbindungen und an den Verbindungsstellen von Querträger und Auflagerprofilen ausgeprägte Kontaktbereiche mit beispielsweise einer ersten Verbindung über eine Kerbe an der Unterkante des Auflageprofils, in die ein vertikaler Profilabschnitt des Querträgers eingreift, und einer zweiten Verbindung durch eine Lasche, die am Querträger vorspringt und in eine Einsteckausnehmung eingreift, erforderlich.

Der Erfindung liegt die Aufgabe zugrunde, für ein Lagerregal der eingangs genannten Art einen Gitterfachboden zu schaffen, der in einer einfachen Bauweise der ineinander gesteckten Profile eine große Stabilität sowie hohe Tragfähigkeit und einen sicheren Zusammenhalt der ineinander gesteckten Bauteile bzw. Profile ermöglicht.

Diese Aufgabe wird erfindungsgemäß dadurch gelöst, dass die Drahtgittermatte abgewinkelte, in die Außenprofilträger eintauchende Drahtenden aufweist, wobei zumindest die Auflageprofile und die Außenprofilträger einen im wesentlichen C-förmigen Querschnitt besitzen und die stirnendseitigen Auflageprofile mit Ausnehmungen ausgebildet sind, in die die Außenprofilträger und der mindestens eine Zwischenprofilträger eingesteckt sind, dass die auf dem mindestens einen Zwischenträger aufliegende Drahtgittermatte zumindest auch eckübergreifend mit Abstützung an den Auflageprofilen eingerahmt ist, wobei die Auflageprofile mit Endabschnitten versehen sind, die als über die Drahtgittermatte und die Außenprofilträger hochstehende Vertikallappen sowie von diesen rechtwinklig nach innen abgekanteten, die Stege der an die Auflageprofile anstoßenden Außenprofilträger übergreifenden Eck-Einrahmungslappen ausgebildet sind.

Es lässt sich damit eine gegebenenfalls voll umfänglich geschlossene Einrahmung aller ineinander gesteckten Bauteile erreichen, wobei die Drahtgittermatte nicht nur über die in die Außenprofilträger eintauchenden, abgewinkelten Drahtenden, sondern weiterhin durch die zumindest an den in den Eckbereichen, benachbart zu den Regalständern an die Auflageprofile zur Anlage kommenden, jeweils äuße-ren Drahtstäbe abgestützt gehalten wird. Der innige, sich selbst tragende und gegenseitig abstützende Verbund aller Bauteile des Gitterfachbodens wird somit weiter verbessert. Denn der Bauteile-Verbund wird von den Eck-Einrahmungslappen, von denen sich in der Gebrauchs- bzw. Einbaulage im Bereich der Regalständer je einer befindet, zusätzlich auch noch von außen her eingefasst und zusammengehalten.

Nach einem vorteilhaften Vorschlag sind für den Gitterfachboden-Verbund erfindungsgemäß einerseits die Auflageprofile und andererseits die Außenprofilträger mit ihren offenen Profilseiten einander gegenüberliegend angeordnet, während der mindestens eine Zwischenprofilträger mit seiner offenen Profilseite nach unten weisend eingesteckt ist. Der Zwischenprofilträger, von denen je nach Tiefe des Lagerregals mehrere vorhanden sind, z.B. bei einer Tiefe von 600 mm zwei und bei einer Tiefe von 1.200 mm vier beabstandet voneinander und zu den Außenprofilträgern vorgesehene Zwischenprofilträger, bietet der Drahtgittermatte damit eine breite Oberfläche, die nämlich von seinem Steg und nicht von einem der demgegenüber schmaleren Flansche des C-förmigen Profils bereitgestellt wird.

Nach einem Vorschlag der Erfindung sind vorzugsweise die Eck-Einrahmungslappen mit einer Durchgangsbohrung und die Außenprofilträger mit zu diesen Durchgangsbohrungen fluchtenden Durchgangsbohrungen versehen. Das ermöglicht es, die Auflageprofile mit den Außenprofilträgern vorzugsweise zu vernieten, optional zu verschrauben.

Nach einem weiteren vorteilhaften Vorschlag der Erfindung sind die Vertikallappen mit einem rechtwinklig nach innen abgekanteten, sich von oben an den benachbarten Drahtstab der Drahtgittermatte anlegenden Kopfanschlag und die Außenprofilträger mit die abgewinkelten Drahtenden unten abstützenden Anschlägen ausgebildet. Die zu den Vertikallappen benachbarten, d.h. jeweils äußeren Drahtstäbe der Drahtgittermatte werden somit von den fußseitigen Gegenanschlägen gegen den Kopfanschlag angedrückt, womit sich eine ergänzende Fixierung und weitere Sicherung des Gitterfachboden-Verbundes erreichen lässt.

Ein weiterer vorteilhafter Vorschlag der Erfindung sieht vor, dass die Vertikallappen mit Ausnehmungen zur Aufnahme von Einhängehaken zur Einrastung des Gitterfachbodens in die Regalständer versehen sind. Die großflächigen Vertikallappen lassen sich somit gleichzeitig als Befestigungs- und Kraftaufnahmeelement nutzen, so dass der C-förmige Querschnitt der Auflageprofile keine ansonsten benötigte Ausstanzung erfordert.

Hierbei empfiehlt es sich, dass an sich bekannte Einhängehaken zum Einsatz kommen, die aus einem Kopfsteg und von diesem an beiden Längsseiten nach hinten vorstehenden, die Ausnehmungen der Vertikallappen bis in die Regalständer durchgreifenden Flügeln bestehen, wobei erfindungsgemäß zumindest die unteren Flügelenden nach außen aufgespreizt sind. Die Aufspreizung der unteren Enden der Flügel, wobei die Divergenz nur gering zu sein braucht, erfordert zwar beim Einhängen in die Ausnehmungen einen etwas höheren Kraftaufwand, stellt aber sicher, dass die Einhängehaken nicht selbsttätig aus den schlitzartigen Ausnehmungen herausfallen können. Damit ist es möglich, die Einhängehaken schon vor dem Montieren des Lagerregals vor Ort in die schlitzartigen Ausnehmungen der Regalständer einzuhängen, was bei der Stecksystem-Montage des Lagerregals vor Ort eine Zeit- und Kostenersparnis mit sich bringt. Denn es braucht bei der Montage vor Ort dann lediglich noch der Gitterfachboden über seine schlitzartigen Ausnehmungen in den Vertikallappen in die zuvor schon eingesetzten Einhängehaken zwischen deren aus den Regalständern vorstehenden Kopfstegen und den Regalständern eingehängt zu werden.

Weitere Einzelheiten und Merkmale der Erfindung ergeben sich aus den Ansprüchen und der nachfolgenden Beschreibung von in den Zeichnungen dargestellten Ausführungsbeispielen der Erfindung. Es zeigen:
- Fig. 1: von einem als solches hinlänglich bekannten Lagerregal in einer perspektivischen Ansicht als Einzelheit einen eckseitigen Regalständer mit einem über einen Einhängehaken darin eingehängten, erfindungsgemäßen Gitterfachboden;
- Fig. 2: einen Gitterfachboden für eine geringere Regaltiefe in einer perspektivischen Draufsicht;
- Fig. 3: als Einzelheit der Fig. 2 in einer Vorderansicht von innen ein stirnseitig angeordnetes Auflageprofil, von denen sich zwei spiegelbildlich gegenüberliegen;
- Fig. 4: den Gitterfachboden der Fig. 2 in einem Schnitt entlang der Linie IV-IV;
- Fig. 5: in einem vergrößerten Maßstab die in Fig. 4 durch ein strichpunktiertes Rechteck gekennzeichnete Einzelheit;
- Fig. 6: in einer perspektivischen Draufsicht einen Gitterfachboden für eine größere Regaltiefe;
- Fig. 7: als Einzelheit der Fig. 6 in einer Vorderansicht von innen ein stirnseitig angeordnetes Auflageprofil, von denen sich zwei spiegelbildlich gegenüberliegen;
- Fig. 8: den Gitterfachboden der Fig. 6 in einem Schnitt entlang der Linie VIII-VIII;
- Fig. 9: in einem vergrößerten Maßstab die in Fig. 8 durch ein strichpunktiertes Rechteck gekennzeichnete Einzelheit;
- Fig.10: eine perspektivische Gesamtansicht eines Einhängehakens; und
- Fig.11: den Einhängehaken der Fig. 10 von der Vorderseite her gesehen.

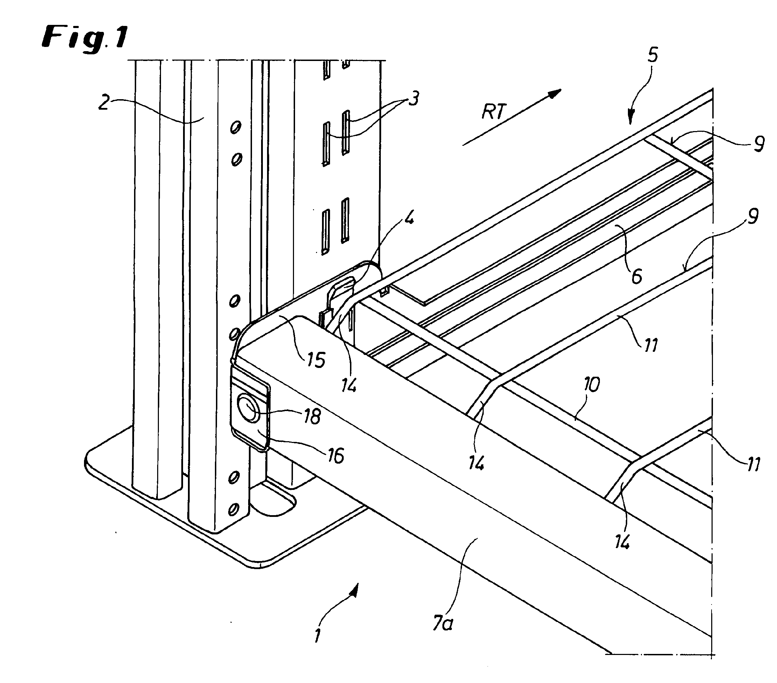

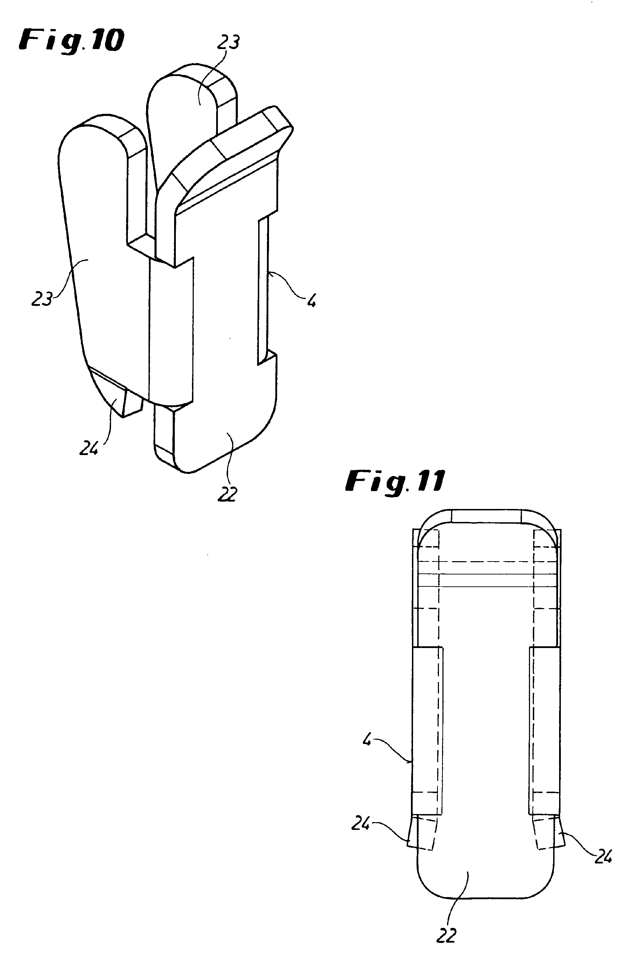

Von einem Lagerregal 1, dessen rechteckige oder quadratische Grundfläche von vier Regalständern 2 begrenzt wird, ist in Fig. 1 einer der in jedem Eckbereich vorhandenen Regalständer 2 dargestellt. Die Regalständer 2 besitzen in einem Rastermaß vorgesehene, paarweise schlitzartige Ausnehmungen 3, die es erlauben, mittels in die Ausnehmungen 3 eingerasteten Einhängehaken 4 (vgl. die Fig. 10 und 11) das Lagerregal 1 in verschiedenen Höhenebenen mit Gitterfachböden 5 zu bestücken. Der Gitterfachboden 5 nach Fig. 1 befindet sich in einer untersten Ebene knapp oberhalb des die Verankerung der Regalständer 2 aufnehmenden Fundaments. Der Pfeil kennzeichnet die von dem Gitterfachboden 5 überbrückte Regaltiefe RT.

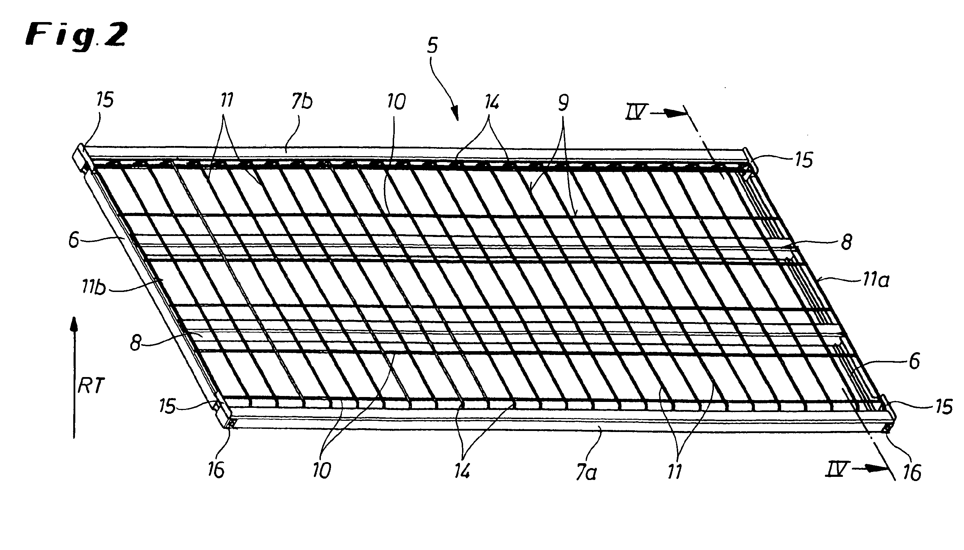

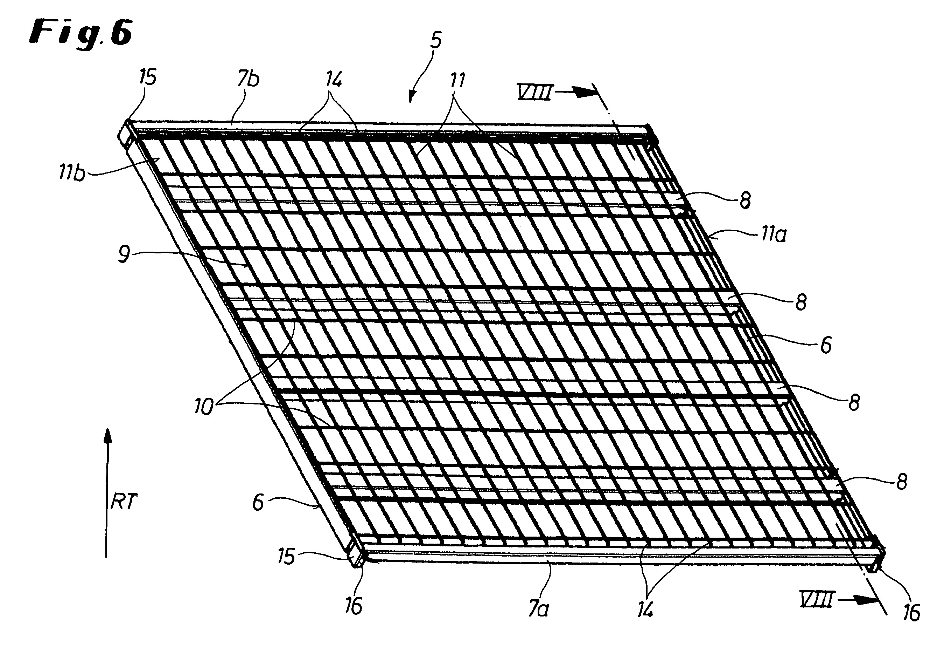

Die Gitterfachböden 5, die in Fig. 2 für eine kleinere und in Fig. 6 für eine größere Regaltiefe RT dargestellt sind, sind als ein umlaufend geschlossener Rahmen ausgebildet und setzen sich aus in der Einbaulage stirnseitigen, im Regal quer verlaufenden Auflageprofilen 6, sich orthogonal dazu in Regallängsrichtung erstreckenden vorderen und hinteren Außenprofilträgern 7a bzw. 7b, im Abstand zwischen den beiden Auflageprofilen 6 angeordneten Zwischenprofilträgern 8 und einer von diesen getragenen, in dem Rahmen abgestützten und gehaltenen Drahtgittermatte 9 zusammen. Bei dem Gitterfachboden für eine kleinere Regaltiefe RT sind zwei parallel voneinander beabstandete Zwischenprofilträger 8 (vgl. Fig. 2) und bei der größeren Regaltiefe RT sind vier parallel voneinander beabstandete Zwischenprofilträger 8 (vgl. Fig. 6) vorgesehen.

Die Drahtgittermatte 9 wird von sich kreuzenden, in Regallängsrichtung verlaufenden Drähten 10 und quer dazu verlaufenden Drähten 11 gebildet. Die Auflageprofile 6, der vordere sowie der hintere Außenprofilträger 7a, 7b und die Zwischenprofilträger 8 besitzen sämtlich einen im wesentlichen C-förmigen Querschnitt, wobei die Auflageprofile 6 und der vordere und hintere Außenprofilträger 7a, 7b einander mit ihren offenen Profilseiten, d.h. nach innen hin zugewandt sind, während die Zwischenprofilträger 8 demgegenüber mit ihrem Steg oben liegend und der offenen Profilseite nach unten weisend angeordnet sind.

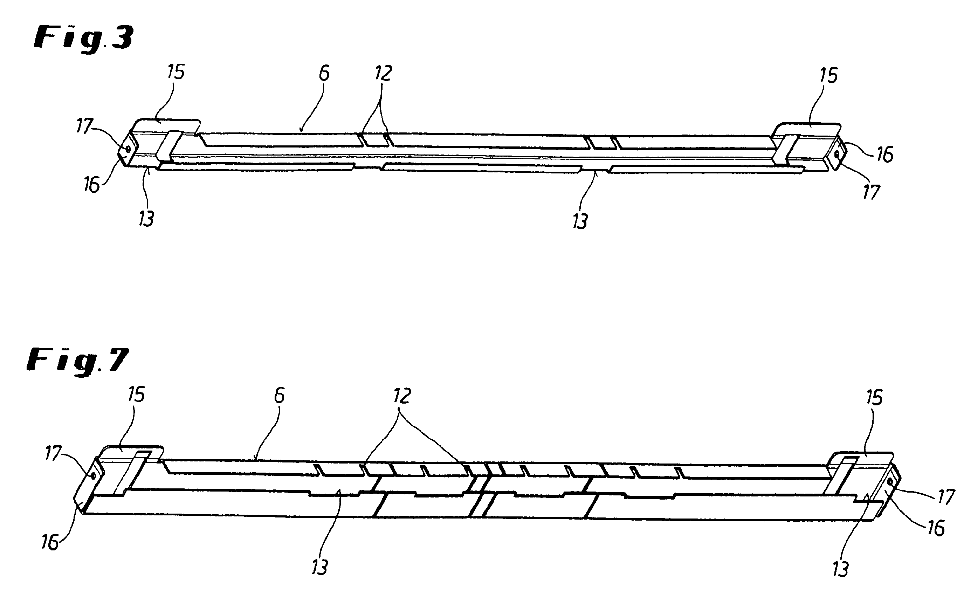

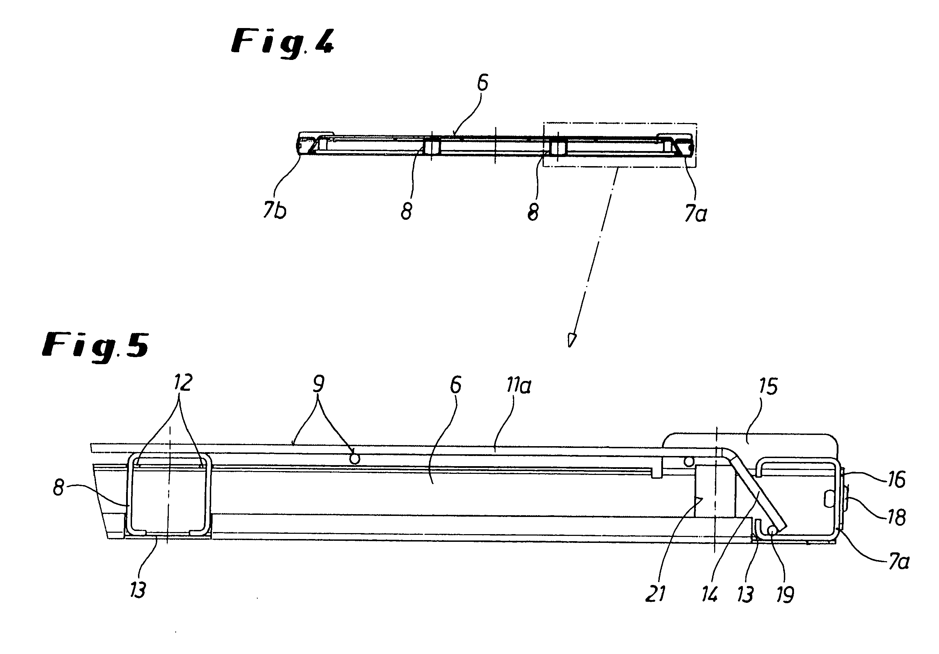

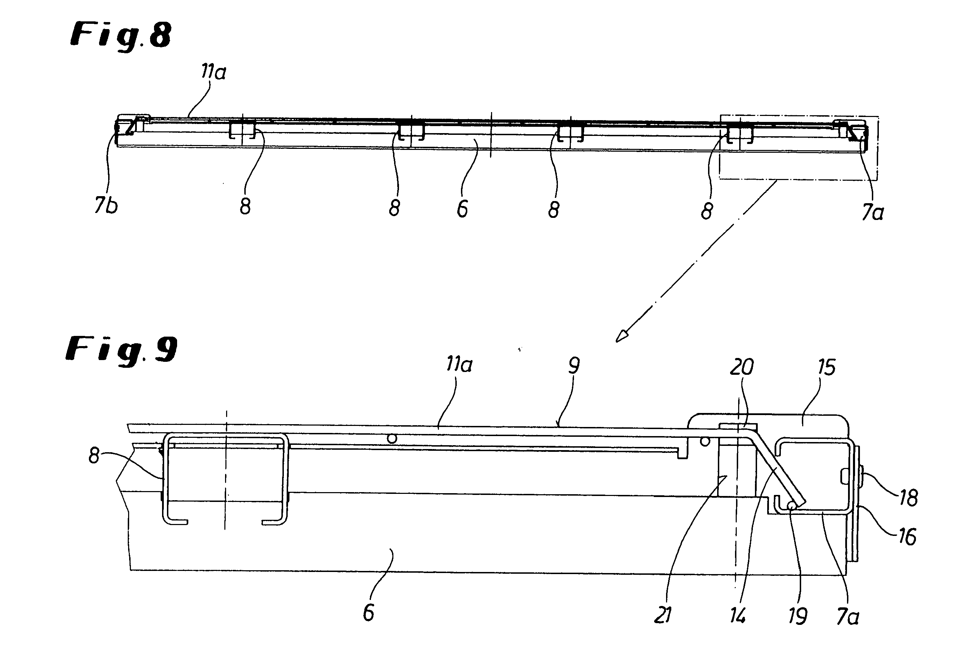

Zum Zusammenbau durch Ineinanderstecken sind, wie die Fig. 3 für einen Gitterfachboden geringerer Regaltiefe und die Fig. 7 für einen Gitterfachboden mit größerer Regaltiefe zeigt, die Auflageprofile 6 mit Schlitzausnehmungen 12 und Ausschnitten 13 in ihren Flanschen ausgebildet, in die die Außenprofilträger 7a, 7b und die Zwischenprofilträger 8 mit ihren Profilwänden bzw. -flanschen eingesteckt werden bzw. auf denen sie zur Auflage kommen (vgl. die Fig. 4 und 5 sowie 8 und 9). Die quer verlaufenden Drähte 11 weisen an beiden Seiten nach unten abgewinkelte Drahtenden 14 auf, mit denen sie in die offenen Profilseiten der Außenprofilträger 7a, 7b eintauchen bzw. -greifen (vgl. auch die Fig. 5 und 9).

Die beidseitigen Endabschnitte der in den Fig. 3 und 7 dargestellten Auflageprofile 6 sind als Vertikallappen 15 ausgebildet, mit davon nach innen abgewinkelten, der Steghöhe der Außenprofilträger 7a, 7b (vgl. Fig. 1) entsprechenden Eck-Einrahmungslappen 16. In diesen vorgesehene Durchgangsbohrungen 17 und zu diesen fluchtende Durchgangsbohrungen im Steg der Außenprofilträger 7a und 7b erlauben es, den ineinander gesteckten Rahmen mittels Nieten 18 zu vernieten, optional zu verschrauben.

Wie sich aus den Fig. 1 sowie 5 und 9 deutlicher entnehmen lässt, wird nicht nur der Rahmen eckübergreifend eingefasst, sondern auch die Drahtgittermatte 9. Denn durch die über die Außenprofilträger 7a, 7b und die Drahtgittermatte 9 hochstehenden Vertikallappen 15 werden auch die jeweils äußeren quer verlaufenden Drähte 11 a bzw. 11 b der Drahtgittermatte 9 eckübergreifend abgestützt eingerahmt. Die Drähte 11 a, 11 b kommen nämlich einerseits mit ihren abgewinkelten Drahtenden 14 und andererseits über eine Teillänge im Übergangsbereich von den abgewinkelten Drahtenden 14 bis zu einem geraden Abschnitt der Drähte 11 a, 11 b an den Vertikallappen 15 zur Anlage.

In den Außenprofilträgern 7a, 7b sind Anschläge 19 vorgesehen, die sich fußseitig an die abgewinkelten Drahtenden 14 zumindest der äußeren Drähte 11 a, 11 b der Drahtgittermatte 9 anlegen, womit sich eine gewisse Vorspannung erreichen lässt. Bei der Ausführung des Auflageprofils 9 für einen Gitterfachboden 5 mit größerer Regaltiefe RT wird das noch durch einen an den Vertikallappen 15 vorgesehenen Kopfanschlag 20 unterstützt, gegen den bzw. die die äußeren Drähte 11a, 11b angedrückt werden.

Die Funktionalität der Vertikallappen 15, die im Zusammenspiel mit den Eck-Einrahmungslappen 16 eine umfangsgeschlossene, von außen eingefasste Bauweise des Gitterfachbodens 5 mit eckübergreifender Einrahmung der Drahtgittermatte 9 zumindest im Bereich der Regalständer 2 ermöglichen (vgl. Fig. 1), wird durch Ausnehmungen 21 zum Befestigen des Gitterfachbodens 5 in den Regalständern 2 mittels Einhängehaken 4 nochmals erweitert. Ein solcher in den Fig. 10 und 11 dargestellter Einhängehaken 4 besteht aus einem Kopfsteg 22, der oben nach außen abgewinkelt ist, und an den Längsseiten des Kopfsteges 22 nach hinten angeformten bzw. abgekanteten Flügeln 23 mit einem Abstand voneinander, der den paarweisen schlitzartigen Ausnehmungen 3 in den Regalständern 2 entspricht. Die unteren Flügelenden 24 sind etwas nach außen aufgespreizt (vgl. Fig. 11), was die Auslieferung der Regalständer 2 mit vormontierten Einhängehaken 4 ermöglicht, die nämlich nicht selbsttätig aus den schlitzartigen Ausnehmungen 3 herausfallen können. Bei der Endmontage vor Ort braucht damit der Gitterfachboden 5 lediglich noch mit den Ausnehmungen 21 der Vertikallappen 15 hinter die aus den Regalständern 2 vorstehenden Kopfstege 22 eingehängt zu werden.

### Bezugsziffernliste

- 1: Lagerregal
- 2: Regalständer
- 3: schlitzartige Ausnehmung (paarweise vorgesehene)
- 4: Einhängehaken
- 5: Gitterfachboden
- 6: Auflageprofil
- 7a: vorderer Außenprofilträger
- 7b: hinterer Außenprofilträger
- 8: Zwischenprofilträger
- 9: Drahtgittermatte
- 10: Draht (Regallängsrichtung)
- 11: Draht (Regalquerrichtung)
- 11a, 11b: äußerer Draht
- 12: Schlitzausnehmung
- 13: Ausschnitt
- 14: abgewinkeltes Drahtende
- 15: Vertikallappen
- 16: Eck-Einrahmungslappen
- 17: Durchgangsbohrung (des Eck-Einrahmungslappens)
- 18: Niet
- 19: Anschlag
- 20: Kopfanschlag
- 21: Ausnehmung
- 22: Kopfsteg
- 23: Flügel
- 24: unteres Flügelende
- RT: Pfeil Regaltiefe

## Patentansprüche

1. Lagerregal (1) mit zur Ablage von Lasten in dessen eckseitigen Regalständern (2) eingehängten Gitterfachböden (5), die aus stirnendseitigen, in der Einbaulage im Regal quer verlaufenden Auflageprofilen (6), sich orthogonal zu den Auflageprofilen (6) in Regallängsrichtung erstreckenden, vorderen und hinteren Außenprofilträgern (7a, 7b) sowie mindestens einem parallel beabstandet zu den Außenprofilträgern (7a, 7b) verlaufenden Zwischenprofilträger (8) und einer Drahtgittermatte (9) bestehen,
**dadurch gekennzeichnet,**
**dass** die Drahtgittermatte (9) abgewinkelte, in die Außenprofilträger (7a, 7b) eintauchende Drahtenden (14) aufweist, wobei zumindest die Auflageprofile (6) und die Außenprofilträger (7a, 7b) einen im wesentlichen C-förmigen Querschnitt besitzen und die stirnendseitigen Auflageprofile (6) mit Ausnehmungen (12, 13) ausgebildet sind, in die die Außenprofilträger (7a, 7b) und der mindestens eine Zwischenprofilträger (8) eingesteckt sind,
**dass** die auf dem mindestens einen Zwischenprofilträger (8) aufliegende Drahtgittermatte (9) zumindest auch eckübergreifend mit Abstützung an den Auflageprofilen (6) eingerahmt ist, wobei die Auflageprofile (6) mit Endabschnitten versehen sind, die als über die Drahtgittermatte (9) und die Außenprofilträger (7a, 7b) hochstehende Vertikallappen (15) sowie von diesen rechtwinklig nach innen abgekanteten, die Stege der an die Auflageprofile (6) anstoßenden Außenprofilträger (7a, 7b) übergreifenden Eck-Einrahmungslappen (16) ausgebildet sind.

2. Lagerregal nach Anspruch 1,
**dadurch gekennzeichnet,**
**dass** die Eck-Einrahmungslappen (16) mit einer Durchgangsbohrung (17) und die Außenprofilträger (7a, 7b) mit zu diesen Durchgangsbohrungen /17) fluchtenden Durchgangsbohrungen versehen sind.

3. Lagerregal nach Anspruch 1 oder 2,
**dadurch gekennzeichnet,**
**dass** die Vertikallappen (15) mit einem rechtwinklig nach innen abgekanteten, sich von oben an dem benachbarten Drahtstab (11a, b) der Drahtgittermatte (9) anlegenden Kopfanschlag (20) und die Außenprofilträger (7a, 7b) mit die abgewinkelten Drahtenden (14) unten abstützenden Anschlägen (19) ausgebildet sind.

4. Lagerregal nach einem der Ansprüche 1 bis 3,
**dadurch gekennzeichnet,**
**dass** einerseits die Auflageprofile (6) und andererseits die Außenprofilträger (7a, 7b) mit ihren offenen Profilseiten einander gegenüber liegend angeordnet sind und der mindestens eine Zwischenprofilträger (8) mit seiner offenen Profilseite nach unten weisend eingesteckt ist.

5. Lagerregal nach einem der Ansprüche 1 bis 4,
**dadurch gekennzeichnet,**
**dass** die Vertikallappen (15) mit Ausnehmungen (21) zur Aufnahme von Einhängehaken (4) zur Einrastung des Gitterfachbodens (5) in die Regalständer (2) versehen sind.

6. Lagerregal nach Anspruch 5,
**gekennzeichnet durch**
aus einem Kopfsteg (22) und von diesem an beiden Längsseiten nach hinten vorstehende, die Ausnehmungen (21) der Vertikallappen (15) bis in die Regalständer (2) durchgreifende Flügel (23) bestehende Einhängehaken (4), wobei zumindest die unteren Flügelenden (24) nach außen aufgespreizt sind.

## Claims

1. A storage rack (1) with lattice compartment bottoms (5) that are hooked into its corner uprights (2) in order to store loads and consist of bearing profiles (6) on the end face that extend transverse in the installed position in the rack, front and rear outer profiled supports (7a, 7b) that extend orthogonally to the bearing profiles (6) in the longitudinal direction of the rack, as well as at least one intermediate profiled support (8) that extends parallel to and at a distance from the outer profiled supports (7a, 7b) and a wire lattice mat (9),
**characterized in**
**that** the wire lattice mat (9) features angled wire ends (14) that penetrate into the outer profiled supports (7a, 7b), wherein at least the bearing profiles (6) and the outer profiled supports (7a, 7b) have an essentially C-shaped cross section and the bearing profiles (6) on the end face are realized with recesses (12, 13), into which the outer profiled supports (7a, 7b) and the at least one intermediate profiled support (8) are inserted, and in
**that** the wire lattice mat (9) lying on the at least one intermediate profiled support (8) is at least also framed in an overlapping fashion on the corners and supported on the bearing profiles (6), wherein the bearing profiles (6) are provided with end sections realized in the form of vertical tabs (15) that protrude upward over the wire lattice mat (9) and the outer profiled supports (7a, 7b), as well as corner framing tabs (16) that are bent perpendicularly inward and overlap the webs of the outer profiled supports (7a, 7b) abutting on the bearing profiles (6).

2. The storage rack according to Claim 1,
**characterized in**
**that** the corner framing tabs (16) are provided with a through-bore (17) and the outer profiled supports (7a, 7b) are provided with through-bores that are aligned with these through-bores (17).

3. The storage rack according to Claim 1 or 2,
**characterized in that** the vertical tabs (15) are realized with a head stop (20) that is bent perpendicularly inward and places itself against the adjacent wire rod (11a, b) of the wire lattice mat (9) and the outer profiled supports (7a, 7b) are realized with stops (19) that support the angled wire ends (14).

4. The storage rack according to one of Claims 1 to 3,
**characterized in**
**that** the bearing profiles (6) on the one hand and the outer profiled supports (7a, 7b) on the other hand are arranged such that their open profile sides lie opposite of one another and the at least one intermediate profiled support (8) is inserted with its open profile side pointing downward.

5. The storage rack according to one of Claims 1 to 4,
**characterized in**
**that** the vertical tabs (15) are provided with recesses (21) for accommodating suspension hooks (4) that serve for locking the lattice compartment bottom (5) in the uprights (2).

6. The storage rack according to Claim 5,
**characterized by**
suspension hooks (4) that consist of a head piece (22) and wings (23) that protrude rearward from this head piece on both longitudinal sides and extend into the uprights (2) through the recesses (21) of the vertical tabs (15), wherein at least the lower wing ends (24) are spread apart outward.

## Revendications

1. Rayonnage de stockage (1) avec, pour déposer des charges, des tablettes en treillis (5) accrochées dans ses montants (2) de rayonnage angulaires, qui sont constituées de profilés (6) d'appui du côté de l'extrémité frontale, qui dans la position de montage dans le rayonnage s'étendent à la transversale, avec des supports (7a, 7b) de profilés extérieurs avant et arrière s'étendant de manière orthogonale par rapport aux profilés (6) d'appui, dans la direction longitudinale du rayonnage, ainsi qu'avec au moins un support (8) de profilés intermédiaire s'étendant en étant écarté à la parallèle des supports (7a, 7b) de profilés extérieurs et une natte (9) en treillis,
**caractérisé**
**en ce que** la natte (9) en treillis comporte des extrémités (14) de fil métallique coudées, plongeant dans les supports (7a, 7b) de profilés extérieurs, au moins les profilés (6) d'appui et les supports (7a, 7b) de profilés extérieurs ayant une section transversale sensiblement en forme de C et les profilés (6) d'appui du côté de l'extrémité frontale étant conçus avec des évidements (12, 13) dans lesquels sont emboîtés les supports (7a, 7b) de profilés extérieurs et l'au moins un support (8) de profilés intermédiaire,
**en ce que** la natte (9) en treillis reposant sur l'au moins un support (8) de profilés intermédiaire est encadrée au moins également par-dessus les angles avec un soutien sur les profilés (6) d'appui, les profilés (6) d'appui étant munis de parties d'extrémité qui sont conçues comme des pattes (15) verticales saillant vers le haut par-dessus la natte (9) en treillis et les supports (7a, 7b) de profilés extérieurs, ainsi que comme des pattes (16) d'encadrement repliées vers l'intérieur à partir de ces derniers, recouvrant les barrettes des supports (7a, 7b) de profilés extérieurs adjacents aux profilés (6) d'appui.

2. Rayonnage de stockage selon la revendication 1,
**caractérisé en ce que** les pattes (16) d'encadrement angulaire sont munies d'un perçage (17) traversant et les supports (7a, 7b) de profilés extérieurs sont munis de perçages traversants alignés sur lesdits perçages (17) traversants.

3. Rayonnage de stockage selon la revendication 1 ou la revendication 2,
**caractérisé en ce que** les pattes (15) verticales sont conçues avec une butée (20) de tête coudée à angle droit vers l'intérieur s'appuyant par le haut sur la tige métallique (11a, b) de la natte (9) en treillis et les supports (7a, 7b) de profilés extérieurs sont conçus avec des butées (19) soutenant en bas les extrémités (14) de fil métallique coudées.

4. Rayonnage de stockage selon l'une quelconque des revendications 1 à 3,
**caractérisé en ce qu'**avec leurs faces de profilé ouvertes, les profilés (6) d'appui d'une part et les supports (7a, 7b) de profilés extérieurs d'autre part sont placés en étant mutuellement opposés et **en ce que** l'au moins un support (8) de profilé intermédiaire est inséré avec sa face de profilé ouverte dirigée vers le bas.

5. Rayonnage de stockage selon l'une quelconque des revendications 1 à 4,
**caractérisé en ce que** les pattes (15) verticales sont munies d'évidements (21) pour le logement de crochets (4) d'accrochage pour l'enclenchement de la tablette en treillis (5) dans les montants (2) de rayonnage.

6. Rayonnage de stockage selon la revendication 5,
**caractérisé par** des crochets (4) d'accrochage constitués d'une barrette de tête (22) et par des ailettes (23) saillant vers l'arrière sur les deux côtés longitudinaux à partir de cette dernière, traversant les évidements (21) des pattes (15) verticales jusque dans les montants (2) de rayonnage, au moins les extrémités (24) inférieures des ailettes étant déployées vers l'extérieur.
